# EUROPÄISCHE PATENTSCHRIFT

(11) **EP 0 922 794 B1**
(45) Veröffentlichungstag und Bekanntmachung des Hinweises auf die Patenterteilung: **25.05.2005**
(21) Anmeldenummer: 98123415.6
(22) Anmeldetag: 09.12.1998
(51) Int. Cl.: D01F 1/10, D04H 1/42, D06M 13/388

(54) **Vliese aus Elektretfasern, präparierte Faser, vorzugsweise Elektretfaser, Verfahren zu deren Herstellung und ihre Verwendung**
Nonwoven of electret fibres, prepared fibre, preferably electret fibre, production process and use
Non-tissé à base de fibres d'électret, fibre préparée, en particulier fibre d'électret, procédé de production et utilisation

(30) Priorität: 11.12.1997 DE 19755047
(43) Veröffentlichungstag der Anmeldung: 16.06.1999
(73) Patentinhaber: TREVIRA GMBH, 60528 Frankfurt am Main (DE)
(72) Erfinder: Dahringer, Jörg, 86399 Bobingen (DE); Vischer, Axel Dr., 86343 Königsbrunn (DE)
(74) Vertreter: Luderschmidt, Schüler & Partner GbR

(56) Entgegenhaltungen:
- EP-A- 0 075 261
- EP-A- 0 705 931
- DE-A- 2 326 966

## Beschreibung

Die vorliegende Erfindung betrifft textile Flächengebilde, wie beispielsweise Vliese, aus Fasern, die mit einer speziellen Präparation beschichtet sind, und worin die aufgebrachte Präparation die Eigenschaft hat, sich bei thermischer Behandlung des Flächengebildes, die beispielsweise mit einer thermischen Verfestigung einhergehen kann, sich zu ersetzen, so dass Flächengebilde erhalten werden, die eine verbesserte Ladungsstabilität aufweisen.

Textile Flächengebilde mit einer aufgebrachten elektrostatischen Ladung eignen sich beispielsweise für Anwendungen in der Filtertechnik, da sie im Vergleich zu nicht aufgeladenen Flächengebilden eine erhöhte Filterwirkung aufweisen. Besonders geeignet sind hierfür solche Flächengebilde, die zumindest teilweise Elektretfasern enthalten. Elektretfasern im Sinne der vorliegenden Erfindung sind Fasern aus elektrisch nicht leitenden Materialien, die zur Verbesserung der elektrostatischen Eigenschaften organische oder metall-organische Ladungssteuermittel enthalten, die eine aufgebrachte elektrostatische Ladung über einen längeren Zeitraum von bis zu mehreren Jahren zu speichern vermögen. Vliese mit erhöhter Ladungsstabilität sind in EP-A-0 705 931 beschrieben. Gemäß dieser Druckschrift lässt sich die Ladungsstabilität verbessern, wenn den faserbildenden Werkstoffen (Polymerisate oder Polykondensate) in den Elektretfasern ein Ladungssteuermittel zugesetzt wird, und für das faserbildende Material unterschiedliche Werkstoffe eingesetzt werden. Die vorbekannten, als Filtermaterial einsetzbaren Vliese bestehen im Wesentlichen aus verschiedenen Sorten Fasern, wobei nicht notwendigerweise alle enthaltenen Fasern Elektretfasern sind, d. h. dass je nach gewünschtem Eigenschaftsprofil weitere Fasersorten in bestimmten Mengenanteilen enthalten sein können.

Werden die zur Filterherstellung benötigten Fasern nach üblichen Spinnverfahren hergestellt, so müssen diese bei der Herstellung mit einer antistatisch wirkenden Präparationen versehen werden, da andernfalls die bei der Faserproduktion und vor allem bei der Produktion von textilen Flächengebilden auftretenden Reibungsvorgänge zu einer Aufladung und damit zu nicht kontrollierbaren auf die Fasern einwirkenden Kräften führen würden. Gemäß der EP-A-0 705 931 wird eine wasserlösliche antistatische Präparation während der Herstellung auf die Faser aufgetragen und nach der Herstellung des Vlieses ausgewaschen. Die elektrostatische Aufladung der Filter erfolgt im Anschluss daran entweder durch einen gesonderten Aufladungsschritt, z.B. in einer Coronaentladung, oder quasi " in situ" während des Betriebs des Filters über den triboelektrischen Effekt bei Reibung zwischen dem zu filternden Medium und dem Filtermaterial. Nachteil des beschriebenen Verfahrens ist, dass die oben erwähnten Präparationen nur durch Waschen vom Vlies in ausreichendem Maße entfernt werden können. Wird im technischen Maßstab ein Waschverfahren durchgeführt, führt dies zu einer irreversiblen mechanischen Schädigung des Vlieses, was dem Einsatz für Filter entgegenstehen würde.

Weitere für die Herstellung von Stapelfasermaterialien eingesetzte Präparationen sind in der EP-A-O 265 221 beschrieben. Bei diesen Präparationen handelt es sich um vulkanisierte Polysiloxane oder hydrophile Beschichtungen enthaltend Polyalkylenoxid-Ketten oder Segmente, wie beispielsweise ein Blockcopolymer aus Polyethylenoxid und Polyethylenterephthalat-Kettengliedern. Diese Verbindungen werden bei etwa 170°C vulkanisiert und lassen sich nach der Verarbeitung der Fasern zu Flächengebilden nicht mehr mittels einer Temperaturbehandlung ohne Beschädigung der Faser entfernen.

Die aus dem Stand der Technik bekannten Präparationen haben den Nachteil, dass sie sich nach der Bildung des textilen Flächengebildes nicht mehr auf einfache Weise mittels einer Temperaturbehandlung weitgehend rückstandsfrei entfernen lassen. Es wurde nun gefunden, dass sich die Filterwirkung verbessern lässt, und dennoch befriedigende Eigenschaften während der Faserherstellung hat.

Aufgabe der vorliegenden Erfindung war es daher, eine Faser mit einer darauf befindlichen Präparation zu entwickeln, aus der sich auf vereinfachte Weise textile Flächengebilde für Filtermaterialien mit verbesserter Filterwirkung herstellen lassen.

Diese Aufgabe wird gelöst durch eine Elektretfaser gemäß Anspruch 1.

Die Erfindung betrifft somit eine Elektretfaser, aus Werkstoffen, die überwiegend ein fadenbildendes Polymerisat oder Polykondensat enthalten, mit einer auf der Faser aufgebrachten Präparation, bei der sich nach einer Zeit von 20 Minuten bei einer Temperatur von 230 °C, mindestens 80 Gew.-% des Präparationsauftrags verflüchtigt haben.

Der Begriff "Fasern" ist erfindungsgemäß unter seiner breitest denkbaren Bedeutung zu verstehen. Darunter fallen vorzugsweise Stapelfasern, zweckmäßigerweise mit Stapellängen von 0,2 bis 200 mm, insbesondere 0,3 bis 80 mm, aber auch Endlosfasern (Filamente), Bi- oder Mehrkomponentenfasern, Pulpe, Spaltfasern und Split-Film-Fasern.

Unter "Elektretfasern" werden solche Fasern verstanden, die eine aufgebrachte elektrische Ladung über längere Zeit zu speichern vermögen. Die Elektretfasern können auch Mehrkomponentenfasern sein, sind aber in der Regel Einkomponentenfasern.

Die Werkstoffe enthalten fadenbildende Polymerisate oder Polykondensate, die ausgewählt sind aus der Gruppe der Polyolefine, der halogenierten Polyolefine, der Polyacrylate, Polyacrylnitril, Polystyrol und Fluorpolymeren oder aus der Gruppe der Polyester, Polycarbonate, aliphatischen oder aromatischen Polyamide, Polyetherketone (z. B. PEK und PEEK), Polyarylensulfide insbesondere Polyphenylensulfid, Polyacetale und Zelluloseester.

Präparationen im Sinne der Erfindung sind ganz allgemein Lösungen, Emulsionen oder Gemische, die geeignete Wirksubstanzen enthalten, nämlich Verbindungen gemäß der Formel in Patentanspruch 1. Damit sich die Präparation thermisch von der Faser entfernen lässt, muss sich die Wirksubstanz bzw. die Wirksubstanzen zu mindestens 80 Gew.-%, vorzugsweise mindestens 95 Gew.-%, bezogen auf den Präparationsauftrag nach einer Zeit von 20 Minuten bei einer Temperatur von 230 °C verflüchtigt haben.

Vorzugsweise ist neben der bzw. den Wirksubstanzen ein wässriges Lösungsmittel vorhanden. Die Konzentration der Wirksubstanz in der Lösung kann bei der Faserherstellung verändert werden, so dass der Fachmann an der Bandstraße eine einfache Einstellmöglichkeit für den Gewichtsanteil an Wirksubstanz aus der fertigen Faser hat. Der Gewichtsanteil des Präparationsauftrags auf der fertigen Faser beträgt erfindungsgemäß vorzugsweise 0,02 bis 1 Gew.-%, insbesondere 0,05 bis 0,4 Gew.-%, bezogen auf das Gewicht der faserbildenden Werkstoffe.

Unter Präparationsauftrag im Rahmen der Erfindung ist zu verstehen, der durch Extraktion erfasste Bestandteil der Präparation (ohne Wasser bzw. Lösungsmittel derselben) auf der Faser. Die Flüchtigkeit ist der prozentuale Verlust des Präparationsauftrags infolge der thermischen Behandlung.

Bei der Faserherstellung und der Flächenbildung wirkt die Präparation antistatisch. Für bestimmte Einsatzzwecke der Vliese, wie beispielsweise Elektretfilter ist die antistatische Wirkung jedoch häufig unerwünscht. Der erfindungsgemäßeEinsatz der Präparation ermöglicht eine Entfernung der Präparation von Faser nach der Herstellung der Faser oder eines ggf. aus der Faser hergestellten textilen Flächengebildes durch zeitlich begrenztes Aufheizen der Faser auf eine geeignete Temperatur.

In der Formel gemäß Patentanspruch 1 ist der Rest R₁ vorzugsweise ein unsubstituiertes oder substituiertes C₈-C₂₀-Alkyl oder Alkenyl.

Beispiele für geeignete Substituenten sind Chlor, Brom, Jod und Fluor. Vorzugsweise sind die Reste R₁ unsubstituiert. Beispiele für unsubstituierte Reste R₁ sind Cocosfettalkyl, Stearyl, Oleyl, Lauryl, Talgfettalkyl, Octyl, Decyl. Von diesen Resten ist Cocosfettalkyl besonders bevorzugt.

Die Reste R2 und R3 bedeuten vorzugsweise unabhängig voneinander unsubstituiertes oder substituiertes für C1-C4-Alkyl oder Alkenyl, insbesondere C1-C4-Alkyl. Beispiele für geeignete Substituenten sind Chlor, Brom, Jod und Fluor.

Beispiele für geeignete Reste R₂ und R₃ sind aromatische Reste wie Phenyl, Toluyl und Xylyl aliphatisch substituierte Reste wie Chlorethyl, Chlorpropyl, Chlorallylchlorid und Chlorbutyl, sowie aliphatisch unsubstituierte Reste wie Methyl, Ethyl, Isopropyl, Propenyl, Butyl und Butenyl. Bevorzugt wird für die Reste R₁ und R₂ Methyl eingesetzt.

Vorzugsweise handelt es sich bei den Resten R₂ und R₃ unabhängig voneinander um unsubstituierte Reste, insbesondere sind beide Reste R₂ und R₃ unsubstituiert.

Die Wirksubstanz, welche sich verflüchtigen soll, nämlich Verbindungen der Formel gemäß Patentanspruch zersetzen sich thermisch bei relativ niedrigen Temperaturen. Der Gehalt dieser Substanzen auf der thermisch behandelten Faser reduziert sich weitgehend auf einen Gewichtsanteil von weniger als 1%, insbesondere 0,01 bis 0,05 Gew.-%, bezogen auf das Gesamtgewicht. Die antistatische Wirkung der Präparation wird durch die thermische Behandlung stark reduziert. Die Temperatur, bei der die thermische Behandlung durchgeführt werden kann, liegt bei 230 °C und kann aber auch vorteilhaft in einem Temperaturbereich von 100 bis 260 °C, insbesondere 100 bis 200 °C liegen.

Damit die thermische Zersetzung im geeigneten Temperaturbereich auftritt, muss die Flüchtigkeit der Präparation, definiert als prozentualer Verlust des Präparationsauftrags im Hinblick auf den Präparationsauftrag vor der Temperaturbehandlung, hoch sein. Allerdings sind der Flüchtigkeit insoweit Grenzen gesetzt, dass bei der eigentlichen Faserherstellung der Verlust an Präparation bei den Verarbeitungstemperaturen nicht zu groß wird. Die Flüchtigkeit muss daher auf einen optimierten Wert eingestellt werden. Ist die Flüchtigkeit zu gering, musste die Temperatur, bei der die Temperaturhehandlung durchgeführt wird, zu weit angehoben werden, was zu Problemen hinsichtlich der Verarbeitungstemperaturen der Faserwerkstoffe (z. B. Schmelzen der Füllfaser) führen kann.

Die Flüchtigkeit des Präparationsauftrags nach der obigen Definition beträgt bei einer Temperatur von 230 °C nach einer Zeit von 20 Minuten mindestens 80 %.

Die erfindungsgemäßen Anforderungen an die Flüchtigkeit des Präparationsauftrags werden von üblicherweise bei der Faserherstellung eingesetzten Präparationen nicht erfüllt. Die Flüchtigkeit von bekannten Präparationen bei 230 C nach 2 Stunden liegt in der Regel bei 10 % (siehe EP 0 z 075 201 A2).

Ein Beispiel für eine geeignete Präparation ist die kommerziell erhältliche Verbindung ®Genaminox CS (Fa. Clariant GmbH, vormals Hoechst AG) bei der es sich um ein Cocosalkyldimethylaminoxid in wässriger Lösung mit einem Wirkstoffgehalt von ca. 30% handelt. Gemäß Datenblatt der Fa. Hoechst AG (September 1987) lässt sich diese Substanz aufgrund ihrer antistatischen Eigenschaften als Teilkomponente bei der Herstellung von Filamenten einsetzen. Der Einsatz dieser Präparation zur Herstellung von Stapelfasern und als einzige Wirkstoffkomponente in der Präparation geht aus dem Datenblatt nicht hervor.

Vorzugsweise enthält die oben definierte Präparation außer Lösungsmitteln keine weiteren Wirksubstanzen. Zweckmäßigerweise werden daher bei der Herstellung der erfindungsgemäßen Fasern keine weiteren, von der oben definierten Präparation verschiedene Präparationen nämlich unterschiedliche oder zusätzliche Wirksubstanzen eingesetzt. Dies würde der Möglichkeit der späteren Entfernung des Präparationsauftrags durch thermische Behandlung der Faser oder eines daraus hergestellten Flächengebildes entgegenstehen. Es ist allerdings ohne Beeinträchtigung der späteren thermischen Zersetzung möglich, dass eine von den flüchtigen Wirksubstanzen gemäß der Formel (I) in Anspruch 1 verschiedene Wirksubstanzen in geringer Menge von weniger als 20 Gew.-%, vorzugsweise weniger als 10 Gew.-%, bezogen auf die flüchtigen Wirksubstanzen vorhanden ist.

In den faserbildenden Werkstoffen sind zur Verbesserung der elektrostatischen Eigenschaften organische oder metallorganische Ladungssteuermittel enthalten. Mit Hilfe dieser Ladungssteuermittel lassen sich Elektretfasem mit besonders großer Ladungsstabilität erhalten.

Die einsetzbaren organischen oder metallorganischen Ladungssteuermittel sind ausgewählt aus der Gruppe der Triphenylmethane, Ammonium- und Immoniumverbindungen, fluorierte Ammonium- und Immoniumverbindungen; biskationische Säureamide; polymere Ammoniumverbindungen; Dialylammoniumverbindungen, Arylsulfid-Derivate, Phenolderivate, Phosphoniumverbindungen und fluorierte Phosphoniumverbindungen; Calix(n)arene; Metallkomplexverbindungen; Benzimidazolone, oder Azine, Thiazine oder Oxazine, die im Colour Index als Pigments, Solvent Dyes oder Acid Dyes aufgeführt sind. Beispiele für geeignete Ladungssteuermittel sind in der EP-A-O 705 931 (S. 9, Z. 34 bis S. 16, Z. 40) beschrieben.

Der Titer der Faser liegt vorzugsweise unterhalb 3 dtex, insbesondere unter 2 dtex. Das Profil kann auch multilobal, mehrkantig, sternförmig, bändchenförmige oder hantelförmig sein. Vorzugsweise haben die Fasern ein kreisrundes Profil.

Die Reißfestigkeit der Fasern liegt vorzugsweise in einem Bereich von 20 bis 80, insbesondere 30 bis 65 cN/tex, die Reißdehnung vorzugsweise zwischen 10 und 200%, insbesondere 10 bis 60%, besonders bevorzugt 20 bis 50%, der Heißluftschrumpf, gemessen bei 200°C trocken (S₂₀₀) vorzugsweise im Bereich von 0 bis 50%, insbesondere unterhalb 10%.

In einer weiteren bevorzugten Ausführungsform sind die Fasern Mehrkomponentenfasern, vorzugsweise Bikomponentenfasern, insbesondere in Kern/Mantelform. Diese Fasern können mit besonderem Vorteil bei der Herstellung von textilen Flächengebilden als thermisch aktivierbare Bindefasern eingesetzt werden, bei denen beispielsweise die Mantelkomponente bei erhöhter Temperatur an- oder aufschmilzt.

Ein weiterer Gegenstand der Erfindung ist ein textiles Flächengebilde enthaltend Elektretfasern nach Anspruch 1 und schmelzbindbare Fasern und ggf. zusätzliche Füllfasern, welches thermisch bei einer Temperatur von mindestens 100 °C verfestigt ist, welches dadurch gekennzeichnet ist, dass die Wirksubstanz bzw. Verbindung gemäß Formel in Anspruch 1 in einem Anteil von höchstens 1 Gew.-%, bezogen auf das Gesamtgewicht des Flächengebildes, vorhanden ist.

Unter dem Begriff "textiles Flächengebilde" werden ganz allgemein Flächen verstanden, die im Wesentlichen aus Fasern aufgebaut sind. Beispiele für erfindungsgemäße textile Flächengebilde sind nonwovens, wie Vliese oder Spunbonds, Gewebe, Gelege, Gestricke und Gewirke.

Die textilen Flächengebilde gemäß der Erfindung sind vorzugsweise Vliese. Vliese lassen sich besonders vorteilhaft als Filtermaterialien für feine Stäube einsetzen. Besonders bevorzugt handelt es sich bei den textilen Flächengebilden um Karrten- oder Krempelvliese.

Die in den textilen Flächengebilden enthaltenen Fasern können Stapelfasern und Endlosfasern sein. Bevorzugt handelt es sich um Stapelfasern. Werden die Flächengebilde thermisch vorzugsweise bei einer Temperatur von 100 bis 200 °C verfestigt, so sind zumindest teilweise schmelzbindbare Fasern enthalten. Die thermische Verfestigung kann nach üblichen Verfahren, beispielsweise in einem Ofen oder Heißkalander erfolgen. Neben den thermisch bondierbaren Fasern können noch zusätzliche Füllfasern, die gegenüber den thermisch bondierbaren Fasern keine schmelzende oder erweichende Komponente enthalten, vorhanden sein. Wie bereits weiter oben erwähnt, bestehen die Fasern ganz oder teilweise aus Werkstoffen, die Ladungssteuermittel enthalten, so dass diese als Elektretfasern besonders geeignet sind. Für bestimmte technische Anwendungen können Kombinationen aus den vorstehend aufgeführten Fasersorten besonders interessant sein.

Bevorzugt enthalten die textilen Flächengebilde Füllfasern in einem Anteil von 20 bis 90 Gew.-%, insbesondere 70 bis 90 Gew.-%, und schmelzbindbare Fasern, die insbesondere Bikomponentenfasern sind, in einem Anteil von 80 bis 10 Gew.-%, insbesondere 30 bis 10 Gew.-%, bezogen auf das Gesamtgewicht des Flächengebildes. Für das Verhalten der textilen Flächengebilde bezüglich der elektrostatischen Aufladung ist ein Anteil von Elektretfasern von mindestens 10 Gew.-% vorteilhaft.

Vorzugsweise handelt es sich bei den Füllfasern im Wesentlichen um Elektretfasern, d. h. der Anteil beträgt mindestens 80 Gew.-%. Die schmelzbindenden Fasern können ebenfalls ein Elektretmaterial enthalten.

Der Anteil der Wirksubstanz bzw. Verbindung nach Formel gemäß Anspruch 1 im textilen Flächengebilde nach der thermischen Behandlung beträgt vorzugsweise 0,01 bis 0,05 Gew.-%, bezogen auf das Gesamtgewicht des Flächengebildes.

Das Flächengewicht der textilen Flächengebilde lässt sich je nach den gewünschten Eigenschaften in weiten Bereichen einstellen. Bevorzugt ist für das Flächengewicht ein Bereich 5 bis 500 g/m², insbesondere 100 bis 250 g/m².

In den erfindungsgemäßen Flächengebilden ist ein einem Anteil von höchstens 1 Gew.-% Wirksubstanz bzw. Verbindung gemäß Formel gemäß Patentanspruch 1 enthalten.

Um einen maximalen elektrostatischen Effekt zu erhalten, ist ein Anteil der Elektretfasern von 75 bis 100 %, bezogen auf das Gesamtgewicht der im Flächengebilde enthaltenen Fasern, besonders bevorzugt.

Weiterhin kann es zweckmäßig sein, textile Flächengebilde herzustellen aus Mischungen von zwei oder mehreren Sorten von Elektretfasern, wobei jede Sorte ein anderes Ladungssteuermittel enthält.

Ebenfalls Gegenstand der Erfindung ist die Verwendung des Flächengebildes als Filter, vorzugsweise als Feinstaubfilter.

Ferner betrifft die Erfindung ein Verfahren gemäß Anspruch 17 zur Herstellung einer Elektretfaser nach Anspruch 1.

Die Herstellung der Fasern kann beispielsweise auf an sich bekannte Weise durch Verspinnen eines fadenbildenden Werkstoffes, der das Ladungssteuermittel enthält, aus der Schmelze oder aus der Lösung in einem geeigneten Lösemittel, wobei entweder nach dem Nassspinn- oder dem Trockenspinnverfahren gearbeitet werden kann, erforderliche Abkühlung der Filamente, Abziehen mit einer Geschwindigkeit von 1000 bis 5000 m/Min. und daran anschließenden Verstreckung und je nach dem vorgesehenen weiteren Einsatz Wirrablage oder Schnitt zu Stapelfasern, erfolgen.

Das Aufbringen der Präparation kann beispielsweise unmittelbar nach dem Spinnen, vor der Ablage oder dem Schneiden, aber auch vor oder während einer ggf. durchgeführten Verstreckung erfolgen. Es kann zweckmäßig sein, dass das Aufbringen an mehreren Stellen erfolgt, um auftretendem Verlust der Präparation entgegenzutreten.

Das obige Verfahren wird vorzugsweise in der Weise ausgeführt, dass die Elektretfaser, auf die die Präparation aufgebracht ist, ggf. mit weiteren Fasern, zu einem textilen Flächengebilde verarbeitet wird und dieses Flächengebilde bei einer Temperatur thermisch behandelt wird, bei der sich der Anteil der Wirksubstanzen, d. h. der Verbindungen gemäß der Formel in Anspruch 1 durch thermische Zersetzung verringert. Die Temperaturbehandlung kann in einem Kalander erfolgen, wird vorzugsweise aber in einem Ofen, insbesondere Heißluftofen, durchgeführt. Bei der thermischen Behandlung kommt es darauf an, dass die Faser, auf der sich die Präparation befindet, auf an sich bekannte Weise auf eine Temperatur von z. B. 180 °C aufgeheizt wird, bei der sich der Wirkstoff thermisch möglichst rasch zersetzt.

Dabei kann gleichzeitig während der thermischen Behandlung auch eine mechanische Verfestigung oder thermische Bondierung durchgeführt werden. Es ist aber auch möglich, das Flächengebilde beispielsweise zunächst durch Vernadeln zu verfestigen und in einem anschließenden Schritt thermisch zu behandeln, um die Wirkstoffe zu verflüchtigen. Vorzugsweise werden die Flächengebilde nicht mechanisch, sondern ausschließlich thermisch verfestigt.

Das erfindungsgemäße Verfahren ermöglicht die Herstellung von Filtern, die sich elektrostatisch gut aufladen lassen, d. h., die für das Filter schädliche antistatische Wirkung der Präparation nach der thermischen Behandlung weitestgehend verschwunden ist. Vorteilhafterweise muss bei der Herstellung der textilen Flächengebilde die Präparation nicht mit Wasser abgewaschen werden. Es treten daher auch keine Probleme hinsichtlich der Entsorgung der beim Waschen entstehenden Abwasser auf.

Die folgenden Ausführungsbeispiele veranschaulichen die Ausführung der vorliegenden Erfindung.

### BEISPIEL 1a

### Herstellung von erfindungsgemäßen präparierten Elektretfasern (Probenbezeichnung D 21 65)

Polyethylenterephthalat-Faserrohstoff wurde modifiziert durch Vermischen mit Ladungssteuermittel C.I. Solvent Blue 124 (beschrieben in EP-A-O 705 931, Formel 16) in Form eines Masterbatches. Die Konzentration des Ladungssteuermittel in der Spinnware betrug 1,0 Gew.-%. Anschließend wurde der so hergestellt Werkstoff nach konventioneller Spinntechnologie versponnen. Die Spinntemperatur betrug 280°C, die Spinngeschwindigkeit 1500 m/Min.

Als Präparation wurde nach dem Spinnen, vor der Verstreckung und nach der Verstreckung die kommerziell erhältliche Verbindung ®Genaminox CS (Fa. Clariant GmbH, vormals Hoechst AG) aufgetragen. ®Genaminox CS besitzt folgende Eigenschaften:

| | |
|---|---|
| Zusammensetzung: | Cocosalkyldimethylaminoxid in wässeriger Lösung mit einem Feststoffgehalt von ca. 30%. |
| Viskosität (dynamisch): | <100 mPas bei 20°C (nach DIN 53015) |
| Thermische Zersetzung: | > 100°C |
| Dichte (20°C). | ca. 0,97 g/cm³ (nach DIN 51757) |
| pH-Wert: | 7 bis 8 |
| Flüchtigkeit¹⁾ (220°C nach 20 Minuten): | 96,8 Gew.-% |

| | |
|---|---|
| (1) definiert als verflüchtigte Präparationsmenge in %, bezogen auf die Gesamtmenge) | |

Die Präparation wurde mit Wasser soweit verdünnt, dass sich auf der erhaltenen Faser ein Gehalt an Alkyldimethylaminoxid-Gewichtsanteil von 0,15 Gew.-% ergab.

Die produzierte Spinnware wurde nach ebenfalls konventioneller Bandstraßentechnotogie (Stauchkammerkräuselung, Fixierung und Schnitt) zu wollähnlichen, erfindungsgemäß präparierten Stapelfasern der Länge 38 mm mit einem Einzeltiter von 1,3 dtex verarbeitet.

### BEISPIEL 1b

### Herstellung von erfindungsgemäß präparierten Bikomponentenfasern (D 2150)

Polyethylenterephthalat (Schmelztemperatur ca. 256°C) und in der Kette mit 40 Mol.-%Isophthalsäure modifiziertes Polyethylenterephthalat (Schmelztemperatur: ca. 110°C) wurde nach konventioneller Bikomponenten-Spinntechnologie zu einer Kern-Mantelfaser mit niedriger schmelzendem Mantel versponnen. Die Spinntemperatur betrug 280°C, die Spinngeschwindigkeit lag bei 1600 m/Min. Entsprechend Beispiel 1a wurde während dem Spinnen die Präparation ®Genaminox CS aufgetragen, so dass sich auf der fertigen Bikomponentenfaser ein Gehalt an Alkyldimethalyminoxid von 0,31 Gew.-% befand. Die hergestellten Fasern wiesen eine Stapelfaserlänge von 50 mm und einen Einzeltiter von 2,2 dtex auf.

### BEISPIEL 1c

### Herstellung von unpräparierten Elektretfasern (D 2145)

Entsprechend Beispiel 1 wurden im Labormaßstab Stapelfasern ohne Applikation einer Präparation hergestellt. Die Fasern mit der Probenbezeichnung D 21 45 wiesen einen Titer von 1,3 dtex, eine Länge von 38 mm auf.

### BEISPIEL 1d

### Herstellung von konventionell präparierten Elektretfasern (VKEL)

Entsprechend Beispiel 1 wurden Stapelfasern hergestellt, die mit einer üblicherweise im Stand der Technik zum Einsatz kommende Präparation behandelt wurden. Bei der Präparation handelt es sich um eine übliche anionische und nichtionische tensidische Lösung auf Basis von Phosphorsäureestern und Fettsäurepolyethylenglycolestem und -ethern. Der Anteil auf der fertigen Faser betrug 0,12 Gew.-%.

### BEISPIEL 1e

### Herstellung von konventionell präparieren Bikofasern (VKBI)

Entsprechend Beispiel 1b wurden PET/mod. PET-Bikomponentenfaser hergestellt, jedoch kam während dem spinnen die konventionelle Präparation gemäß Beispiel 1d zum Einsatz. Auf der fertigen Bikomponentenfaser befand sich 0,14 Gew.-% dieser Präparation. Die erhaltenen Fasern wiesen eine Stapelfaserlänge von 50 mm und einen Einleitet von 2,2 dtex auf.

### BEISPIEL 2

### Herstellung der Vliese

Aus den gemäß Beispielen 1a-1e hergestellten Stapelfasern wurden auf einer Krempel Vliese mit einem Flächengewicht von 200 g/m2 hergestellt. Anschließend wurden die Vliese thermisch in einem Ofen bei 200°C und einer Verweilzeit von 7,5 Min. verfestigt.

| Vliesmuster | Mischung (Gew.-Verhältnis) | Anteil der Präparation (Gew.-%) |
|---|---|---|
| 17244 | 80% D 2145/20% D 2150 | 0,03 |
| 17245 | 80% D 2165/20% D 2150 | 0,04 |
| 17246 | 80% VKEL/20% DKBI | 0,11 |

An den hergestellten Vliesen wurde die Abscheideleistung mittels eines konventionellen Filterprüfstands (MFP 2000), der nach dem Prinzip der Streulichtmessung arbeitet, geprüft. Dazu wurden die Vliese in einen Träger eingespannt und in einen Prüfkanal eingesetzt. Der Messstaub wurde mit einem Aerosolgenerator erzeugt und mit Hilfe einer rotierenden Bürstel elektrostatisch aufgeladen. Auf der Ausströmseite wurde das Spektrum der Partikel mit einem Partikelzähler (PCS-2000) bestimmt. Dabei wurden folgende Parameter eingestellt:

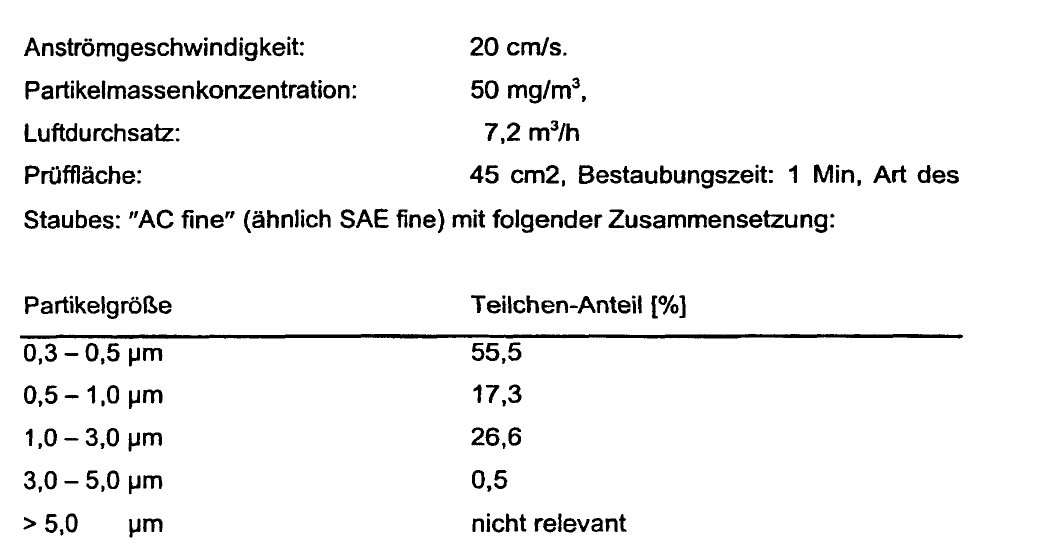

Die mit Vliesmuster 17244 erzielten Trenngrade (Abscheidungsgrad bzw. Filterwirksamkeit eines Filters gemäß EP-A-O 705 931) bezüglich eines definierten Staubpartikelintervalls sind der nachfolgenden Tabelle zu entnehmen. Dabei bedeutet T(X)=1 vollständige Undurchlässigkeit und T(X)=0 vollständige Durchlässigkeit des Filters:

**Tabelle 1**

| Trenngrade T(X) des Vliesmusters 17244 als Funktion der Partikelgröße. Der Versuch wurde 5 mal wiederholt. Druckdifferenz: 29 Pa bei 7,2 m³/h: Bestaubungszeit: 1 Min. | | | | | |
|---|---|---|---|---|---|
| Partikelgröße [µm] | Trenngrad T(X) Muster 17244, Versuche 1 bis 5 | | | | |
| | 1 | 2 | 3 | 4 | 5 |
| 0,3 | 0,92 | 0,94 | 0,97 | 0,96 | 0,94 |
| 0,5 | 0,94 | 0,95 | 0,97 | 0,96 | 0,94 |
| 1,0 | 0,94 | 0,95 | 0,98 | 0,97 | 0,95 |
| 3,0 | 0,96 | 0,96 | 0,99 | 0,98 | 0,97 |
| 5,0 | 0,98 | 0,98 | 1,00 | 0,99 | 0,99 |

Die in Tabelle 1 angegebenen Trenngrade blieben auch bei einer Bestaubungszeit von 10 Min. innerhalb der auflösungsbedingten Grenzen konstant.

Die mit Vliesmuster VVKP erzielten Abscheideraten sind der nachfolgenden Tabelle zu entnehmen:

**Tabelle 2**

| (Vergleich): **Trenngrade T(X) des Vliesmusters 17246 als Funktion der Partikelgröße. Der Versuch wurde 5 mal wiederholt. Druckdifferenz: 28 Pa; Bestaubungszeit: 1 Min.** | | | | | |
|---|---|---|---|---|---|
| Partikelgröße [µm] | Trenngrad T(X) Muster 17246, Versuche 1 bis 5 | | | | |
| | 1 | 2 | 3 | 4 | 5 |
| 0,3 | 0.70 | 0,68 | 0,71 | 0,69 | 0,68 |
| 0,5 | 0,79 | 0,77 | 0.80 | 0,77 | 0,79 |
| 1,0 | 0,86 | 0,85 | 0,86 | 0,85 | 0,85 |
| 3,0 | 0,96 | 0,97 | 0,97 | 0,95 | 0,96 |
| 5,0 | 0,99 | 0,99 | 0.99 | 0,99 | 0,99 |

Auch die Trenngrade, die in Tabelle 2 angegeben sind, blieben über einen Zeitraum der Bestaubung von 10 Minuten innerhalb der auflösungsbedingten Grenzen konstant.

Die Ergebnisse in Tabelle zeigen, dass Vliesstoffe aus Fasern, bei denen bei der Herstellung der Präparation ®Genaminox verwendet wurde, mit sehr hohem Trenngrad (Abscheideleistung) hergestellt werden können. Im Gegensatz zu bekannten Verfahren kann mit herkömmlicher Präparation die antistatische Präparation thermisch aus dem Vliesstoff entfernt werden. Ein Auswaschen der Präparation mit den damit verbundenen Schädigungen der Vliesstruktur kann unterbleiben.

Wie ein Vergleich der Trenngrade von Tabelle 1 und Tabelle 2 zeigt, ist insbesondere im Bereich von feinen Stäuben die Filterwirkung der Vliese aus den erfindungsgemäßen Fasern höher, als bei Vliesen, die aus Fasern mit herkömmlicher Präparation hergestellt worden sind.

## Patentansprüche

1. Elektretfaser, aus Werkstoffen, die überwiegend ein fadenbildendes Polymerisat oder Polykondensat enthalten, die zur Verbesserung der elektrostatischen Eigenschaften organische oder metall-organische Ladungssteuermittel enthalten, auf welche eine Präparation, welche mindestens eine Wirksubstanz enthält, aufgebracht ist, **dadurch gekennzeichnet, dass** die Präparation Wirksubstanzen enthält, die zu mindestens 80 Gew.-% aus Verbindungen der allgemeinen Formel I
**R**_{**1**}**R**_{**2**}**R**_{**3**}**NO**
worin R₁ Wasserstoff, ein unsubstituiertes oder substituiertes C₁-C₃₀-Alkyl, Alkenyl, oder Aryl bedeutet und R₂ und R₃ unabhängig voneinander für Wasserstoff unsubstituiertes oder substituiertes C₁-C₁₀-Alkyl, Alkenyl, oder Aryl bestehen, die Menge des auf der fertigen Faser aufgebrachten Wirkstoffs 0,02 bis 1 Gew.-% beträgt und der Wirkstoff nach einer Behandlung während einer Zeit von 20 Minuten bei einer Temperatur von 230 °C sich zumindestens zu 80 Gew.-% verflüchtigt.

2. Faser nach Anspruch 1, **dadurch gekennzeichnet, dass** in Formel (I) R₁ ein unsubstituiertes oder substituiertes C₈-C₂₀-Alkyl oder Alkenyl bedeutet und R₂ und R₃ unabhängig voneinander für ein unsubstituiertes oder substituiertes für C₁-C₄-Alkyl oder Alkenyl stehen.

3. Faser nach Anspruch 1, **dadurch gekennzeichnet, dass** in Formel (I) R₂ und R₃ unabhängig voneinander ein unsubstituiertes C₁-C₄-Alkyl, vorzugsweise Methyl ist.

4. Faser nach Anspruch 1, **dadurch gekennzeichnet, dass** in Formel (I) R₁ ein unsubstituiertes C₁- bis C₂₀-Alkyl, vorzugsweise Cocosfettalkyl ist.

5. Faser nach einem der Ansprüche 1 bis 4, **dadurch gekennzeichnet, dass** die Präparation 10 bis 80 Gewichtsteile einer Verbindung der Formel (I) und 90 bis 20 Gewichtsteile eines wässerigen Lösungsmittels enthält.

6. Faser nach einem der Ansprüche 1 bis 5, **dadurch gekennzeichnet, dass** das Polymerisat oder Polykondensat ausgewählt ist aus der Gruppe der Polyolefine, der halogenierten Polyolefine, der Polyacrylate, Polyacrylnitril, Polystyrol und Fluorpolymeren oder aus der Gruppe der Polyester, Polycarbonate, aliphatischen oder aromatischen Polyamide, Polyimide, Polyetherketone (z.B. PEK und PEEK), Polyarylensulfide, insbesondere Polyphenylensulfid, Polyacetale und Zelluloseester.

7. Faser nach einem der Ansprüche 1 bis 6, **dadurch gekennzeichnet, dass** die Faser eine präparierte Bikomponentenfaser oder Mehrkomponentenfaser, vorzugsweise eine Kern/Mantelfaser ist.

8. Faser nach einem der Ansprüche 1 bis 7, **dadurch gekennzeichnet, dass** die Faser eine präparierte Einkomponentenfaser ist.

9. Faser nach einen Ansprüche 1 bis 8, **dadurch gekennzeichnet, dass** der Gewichtsanteil Wirksubstanz auf der Faser im Bereich von 0,1 bis 0,4 Gew.-%, bezogen auf das Gewicht der faserbildenden Werkstoffe, liegt.

10. Textiles Flächengebilde enthaltend Elektretfasern nach Anspruch 1 und schmelzbindbare Fasern und ggf. zusätzliche Füllfasern, welches thermisch bei einer Temperatur von mindestens 100°C verfestigt ist, **dadurch gekennzeichnet, dass** die Wirksubstanz bzw. die Verbindung gemäß Formel (I) in einem Anteil von höchstens 1 Gew.-%, bezogen auf das Gesamtgewicht des Flächengebildes, vorhanden ist.

11. Textiles Flächengebilde nach Anspruch 10, **dadurch gekennzeichnet, dass** der Anteil der Wirksubstanz 0,01 bis 0,05 Gew.-%, bezogen auf das Gesamtgewicht des Flächengebildes, beträgt.

12. Textiles Flächengebilde nach Anspruch 10 oder 11, **dadurch gekennzeichnet, dass** das Flächengebilde bei einer Temperatur von 100°C bis 200°C verfestigt ist.

13. Textiles Flächengebilde nach einem der Ansprüche 10 bis 12, **dadurch gekennzeichnet, dass** es ein Vlies, vorzugsweise ein Karden- oder Krempelvlies ist.

14. Textiles Flächengebilde nach einem der Ansprüche 10 bis 13, **dadurch gekennzeichnet, dass** Füllfasern in einem Anteil von 20 bis zu 90 Gew.-% und Bikomponentenfasern in einem Anteil von 80 bis 20 Gew.-%, bezogen auf das Gesamtgewicht des Flächengebildes, enthalten sind.

15. Verwendung des textilen Flächengebildes nach einem der Ansprüche 10 bis 14 als Filter, vorzugsweise als Feinstaubfilter.

16. Verwendung der Faser nach Anspruch 1 in textilen Flächengebilden.

17. Verfahren zur Herstellung einer Elektretfaser nach Anspruch 1, wobei ein fadenbildendes Polymerisat oder Polykondensat, welches ein organisches oder metall-organisches Lösungsmittel enthält, ausgesponnen und zu einer Faser weiterverarbeitet wird und bei der Faserherstellung eine Präparation, die mindestens eine Wirksubstanz enthält, auf die Faser appliziert wird, **dadurch gekennzeichnet, dass** mindestens 80 Gew.-% der in der Präparation enthaltenen Wirksubstanzen sich nach einer Zeit von 20 Minuten bei einer Temperatur von 230 °C verflüchtigen, die Menge des aufgetragenen Wirkstoffs 0,02 bis 1 Gew.-% beträgt und die Wirksubstanz einer Verbindung der Formel (I) ist.

18. Verfahren zur Herstellung eines textilen Flächengebildes, **dadurch gekennzeichnet, dass** man Fasern gemäß einem der Ansprüche 1 bis 9 zu einem textilen Flächengebilde verarbeitet und dieses Flächengebilde bei einer Temperatur thermisch behandelt, bei der sich der Anteil der Wirksubstanz des Präparationsauftrags durch thermische Zersetzung um mindestens 80 % verringert.

19. Verfahren nach Anspruch 18, **dadurch gekennzeichnet, dass** die Faser mit einer Krempel oder Karde zu einem Vlies verarbeitet wird.

## Claims

1. Electret fibre made of materials which comprise predominantly a filament-forming polymerisate or polycondensate, which polymerisate or polycondensate contain, to allow their electrostatic properties to be improved, organic or metallo-organic charge-controlling agents to which a preparation which contains at least one active substance is applied, **characterised in that** the preparation contains active substances of which at least 80% by weight is composed of compounds having the general formula I
**R**_{**1**}**R**_{**2**}**R**_{**3**}**NO**
wherein R₁ is hydrogen, an unsubstituted or substituted C₁-C₃₀-alkyl, alkenyl or aryl, and R₂ and R₃, separately from one another, stand for hydrogen unsubstituted or substituted C₁-C₁₀-alkyl, alkenyl or aryl, the quantity of active substance applied to the finished fibre is 0.02 to 1% by weight and at least 80% by weight of the active substance evaporates after treatment for a period of 20 minutes at a temperature of 230°C.

2. Fibre according to claim 1, **characterised in that**, in formula (I), R₁ is an unsubstituted or substituted C₈-C₂₀-alkyl or alkenyl, and R₂ and R₃, separately from one another, stand for an unsubstituted or substituted C₁-C₄-alkyl or alkenyl.

3. Fibre according to claim 1, **characterised in that**, in formula (I), R₂ and R₃, separately from one another, are an unsubstituted C₁-C₄-alkyl, preferably methyl.

4. Fibre according to claim 1, **characterised in that** in formula (I), R₁ is an unsubstituted C₁ to C₂₀-alkyl, preferably coconut fat alkyl.

5. Fibre according to one of claims 1 to 4, **characterised in that** the preparation contains 10 to 80 parts by weight of a compound of formula (I) and 90 to 20 parts by weight of an aqueous solvent.

6. Fibre according to one of claims 1 to 5, **characterised in that** the polymerisate or polycondensate is selected from the group comprising the polyolefins, the halogenated polyolefins, the polyacrylates, polyacryl nitrile, polystyrene and flouropolymers, or from the group comprising the polyesters, polycarbonates, aliphatic or aromatic polyamides, polyimides, polyether ketones (e.g. PEK and PEEK), polyarylene sulphides and in particular polyphenylene sulphide, polyacetals and cellulose esters.

7. Fibre according to one of claims 1 to 6, **characterised in that** the fibre is a prepared bi-component or multi-component fibre and preferably a core/sheath fibre.

8. Fibre according to one of claims 1 to 7, **characterised in that** the fibre is a prepared mono-component fibre.

9. Fibre according to one of claims 1 to 8, **characterised in that** the proportion by weight of active substance on the fibre is in the range from 0.1 to 0.4% by weight as a percentage of the weight of the fibre-forming materials.

10. Textile fabric containing electret fibres according to claim 1, fibres able to be bonded by fusion and, if required, additional filler fibres, which fabric is thermally consolidated at a temperature of at least 100°C, **characterised in that** the active substance, i.e. the compound of formula (I), is present in a proportion of not more than 1% by weight as a percentage of the total weight of the fabric.

11. Textile fabric according to claim 10, **characterised in that** the proportion of the active substance is 0.01 to 0.05% by weight as a percentage of the total weight of the fabric.

12. Textile fabric according to claim 10 or 11, **characterised in that** the fabric is consolidated at a temperature of 100°C to 200°C.

13. Textile fabric according to one of claims 10 to 12, **characterised in that** it is a non-woven and preferably a carded or combed non-woven.

14. Textile fabric according to one of claims 10 to 13, **characterised in that** filler fibres are included in a proportion of 20 to 90% by weight and bi-component fibres in a proportion of 80 to 20% by weight, as percentages of the total weight of the fabric.

15. Use of the textile fabric according to one of claims 10 to 14 as a filter, preferably a filter for fine dust.

16. Use of the fibre according to claim 1 in textile fabrics.

17. Method of producing an electret fibre according to claim 1, wherein a filament-forming polymerisate or polycondensate which contains an organic or metallo-organic solvent is spun, and further processed into a fibre and, in the production of the fibre, a preparation which contains at least one active substance is applied to the fibre, **characterised in that** at least 80% by weight of the active substances contained in the preparation evaporate after a period of 20 minutes at a temperature of 230°C, the quantity of active substance applied is 0.02 to 1% by weight, and the active substance is a compound of formula (I).

18. Method of producing a textile fabric, **characterised in that** fibres according to one of claims 1 to 9 are processed into a textile fabric and this fabric is treated thermally at a temperature at which the proportion of the active substance in the preparation applied decreases by at least 80% as a result of thermal decomposition.

19. Method according to claim 18, **characterised in that** the fibre is processed into a non-woven with a card or a comb.

## Revendications

1. Fibres d'électret en matériau qui contiennent principalement un polymérisat ou un polycondensat formant du fil, qui contiennent des agents de contrôle de charge organiques ou organométalliques, pour améliorer les propriétés électrostatiques, sur lesquelles est appliquée une préparation qui contient au moins une substance active, **caractérisées en ce que** la préparation contient des substances actives qui sont composées d'au moins 80 % en poids de composés de formule générale I
R₁R₂R₃NO
dans laquelle R₁ représente l'hydrogène, un groupe alkyle, alcényle ou aryle en C₁-C₃₀ non substitué ou substitué et R₂ et R₃ indépendamment l'un de l'autre représentent l'hydrogène, un groupe alkyle, alcényle ou aryle en C₁-C₁₀ non substitué ou substitué, la quantité de substance active appliquée sur la fibre finie s'élève de 0,02 à 1 % en poids et la substance active se vaporise jusqu'au moins 80 % en poids après un traitement pendant une période de 20 minutes à une température de 230°C.

2. Fibre selon la revendication 1, **caractérisée en ce que** dans la formule (I) R₁ représente un groupe alkyle ou alcényle en C₈-C₂₀ non substitué ou substitué et R₂ et R₃ indépendamment l'un de l'autre représentent un groupe alkyle ou alcényle en C₁-C₄ non substitué ou substitué.

3. Fibre selon la revendication 1, **caractérisée en ce que** dans la formule (I) R₂ et R₃ indépendamment l'un de l'autre sont un groupe alkyle en C₁-C₄ non substitué, de préférence un groupe méthyle.

4. Fibre selon la revendication 1, **caractérisée en ce que** dans la formule (I) R₁ est un groupe alkyle en C₁ à C₂₀ non substitué, de préférence un alkyle gras de noix de coco.

5. Fibre selon l'une des revendications 1 à 4, **caractérisée en ce que** la préparation contient 10 à 80 parties en poids d'un composé de formule (I) et 90 à 20 parties en poids d'un solvant aqueux.

6. Fibre selon l'une des revendications 1 à 5, **caractérisée en ce que** le polymérisat ou le polycondensat est choisi dans le groupe des polyoléfines, des polyoléfines halogénées, des polyacrylates, du polyacrylonitrile, du polystyrène et des polymères fluorés ou dans le groupe des polyesters, des polycarbonates, des polyamides aliphatiques ou aromatiques, des polyimides, des cétones de polyéther (par exemple PEK et PEEK), des polyarylènes sulfure, en particulier des polyphénylènes sulfure, des polyacétates et des esters de cellulose.

7. Fibre selon l'une des revendications 1 à 6, **caractérisée en ce que** la fibre est une fibre à deux composants ou à plusieurs composants, de préférence une fibre coeur/manteau.

8. Fibre selon l'une des revendications 1 à 7, **caractérisée en ce que** la fibre est une fibre à composant unique préparée.

9. Fibre selon l'une des revendications 1 à 8, **caractérisée en ce que** la proportion pondérale de substance active sur la fibre se trouve dans la plage allant de 0,1 à 0,4 % en poids, par rapport au poids des matériaux formant une fibre.

10. Structure de surface textile contenant des fibres d'électret selon la revendication 1 et des fibres pouvant être liées par fusion et le cas échéant des fibres de charge supplémentaires, qui est solidifiée thermiquement à une température d'au moins 100°C, **caractérisée en ce que** la substance active ou le composé selon la formule (I) est présent dans une proportion d'au plus 1 % en poids par rapport au poids total de la structure de surface.

11. Structure de surface textile selon la revendication 10, **caractérisée en ce que** la proportion de substance active s'élève de 0,01 à 0,05 % en poids par rapport au poids total de la structure de surface.

12. Structure de surface textile selon la revendication 10 ou 11, **caractérisée en ce que** la structure de surface est solidifiée à une température de 100°C à 200°C.

13. Structure de surface textile selon l'une des revendications 10 à 12, **caractérisée en ce que** c'est une étoffe non tissée, de préférence un non-tissé de carde ou de cardeuse.

14. Structure de surface textile selon l'une des revendications 10 à 13, **caractérisée en ce que** les fibres de charge sont comprises dans une proportion de 20 à 90 % en poids et les fibres à deux composants dans une proportion de 80 à 20 % en poids par rapport au poids total de la structure de surface textile.

15. Utilisation de la structure de surface textile selon l'une des revendications 10 à 14 en tant que filtre, de préférence en tant que filtre de poussières fines.

16. Utilisation des fibres selon la revendication 1 dans des structures de surface textiles.

17. Procédé de production d'une fibre d'électret selon la revendication 1, dans lequel un polymérisat ou un polycondensat formant des fils, qui contient un solvant organique ou organométallique, est filé et est transformé en une fibre et une préparation, qui contient au moins une substance active, est appliquée sur la fibre pendant la production de fibre, **caractérisé en ce qu'**au moins 80 % en poids des substances actives comprises dans la préparation se vaporisent après une période de 20 minutes à une température de 230°C, la quantité de substance active appliquée s'élève de 0,02 à 1 % en poids et la substance active est un composé de formule (I).

18. Procédé de production d'une structure de surface textile, **caractérisé en ce que** l'on transforme les fibres selon l'une des revendications 1 à 9 en une structure de surface textile et **en ce que** l'on traite thermiquement cette structure de surface à une température, à laquelle la proportion de substance active de l'application de préparation diminue d'au moins 80 % par décomposition thermique.

19. Procédé selon la revendication 18, **caractérisé en ce que** la fibre est transformée avec une carde ou une cardeuse en une étoffe non-tissée.
